# EUROPEAN PATENT APPLICATION

(11) **EP 4 254 759 A1**
(43) Date of publication of application: **04.10.2023**
(21) Application number: 22165742.2
(22) Date of filing: 31.03.2022
(51) Int. Cl.: H02M 3/00, H02M 1/00

(54) **DC/DC CONVERTER FOR BATTERY CHARGERS, AND METHOD OF CONTROLLING SUCH A DC/DC CONVERTER AT VERY LIGHT LOAD CONDITIONS**

(71) Applicant: Watt & Well, 84120 Pertuis (FR); Renault s.a.s, 92100 Boulogne Billancourt (FR)
(72) Inventor: MEGHNOUS, Ahmed Rédha, 91360 Epinay sur Orge (FR); IGLESIAS, Raoul, 92160 Antony (FR); GUILBAUD, Maël, 91400 Orsay (FR); GASCHER, Alain, 92310 Sévres (FR); KONATE, Christophe, 91300 Massy (FR); TALEB, Miassa, 78955 Carrières sous-Poissy (FR)
(74) Representative: Schmidt, Martin Peter

(57) **Abstract**

A bidirectional resonant DC/DC converter comprising a full-bridge (2) coupled to an CLLLC resonant tank (3) and a power transformer and rectifier stage (4), said full-bridge (2) comprising two pairs of power switches S1/S2 and S3/S4, configured such that in a first mode of operation :
- switches S1 and S4 are driven by the same two pulse pattern with a phase shift β₁, said two pulse pattern comprising a first pulse P1 of width t₁ and a second pulse P2 of width t₂, P1 and P2 being separated by an off-time t₃,
- switches S2 and S3 are driven by the same single pulse pattern comprising pulse P4 of width t₄ with a phase shift β₂.

This converter can be used in battery chargers, in particular for electrical vehicles.

## Description

### Technical field of the invention

The present invention relates to power electronics, and in particular to DC/DC converters using synchronous rectification. Such converters are used in battery chargers, in particular for use with electrical vehicles. In particular, the present invention relates to a method for driving a bidirectional resonant DC/DC converter using a synchronous recification method.

### Prior art

Battery chargers for use with electrical vehicles are composed of two power stages : an AC/DC converter and a DC/DC converter. The DC/DC converter consists of a bidirectional full-bridge resonant topology.

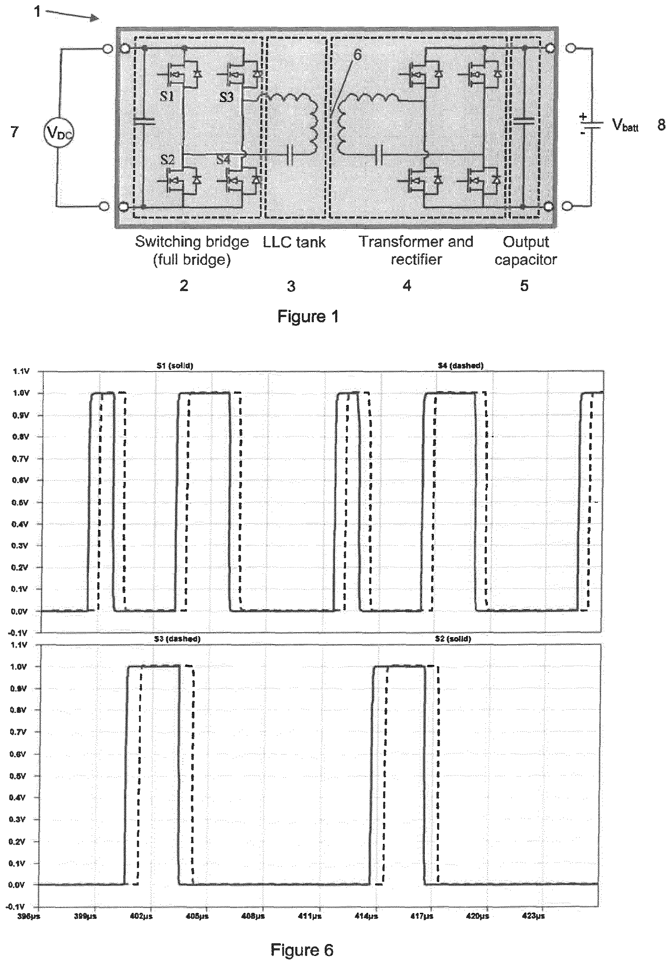

LLC (Inductor-Inductor-Capacitor) resonant converters are known as such. Figure 1 shows a full-bridge CLLLC (Capacitor-Inductor-Inductor-Inductor-Capacitor) converter with full-bridge rectifier. It comprises a first switching bridge, which generates a square waveform to excite the LLC resonant tank, which will output a resonant sinusoidal current. The latter will get rectified by a second switching bridge, and will then be filtered by the output capacitor filter who will output a DC voltage. This circuit topology is symmetric, and the converter operates therefore bidirectional. It is described for instance in the Design Guide TIDM-02002 « Bidirectional CLLLC Resonant Dual Active Bridge (DAB) - Reference Design for HEV/EV Onboard Charger » edited by Texas Instruments Inc. in March 2019 (Revides March 2020).

It is known that this circuit topology leads to a low efficiency under light load conditions. Moreover, under light load conditions it is difficult to control the output voltage, and the operation is likely to lead to overvoltage due to gain limitation, that is to say that the converter gain cannot be lowered sufficiently to keep the output voltage regulated when the load current decreases. This problem can be addressed by using a burst mode with low switching frequencies. However, it is known that devices utilizing this circuit topology at light load conditions with low switching frequencies can generate audible noise , which is undesirable. This is described, for a LLC resonant half-bridge converter, in the paper « Off-Time Control of LLC Resonant Half-Bridge Converter to Prevent Audible Noise Generation at a Light Load Condition » by H.Y. Yoon et al. published in IEEE Transactions on Power Electronics, vol. 33 (10), p. 8808-8817 (2018).

Several remedies have been proposed to resolve these problems.

In a first approach, the toppology of the power converter can be adjusted between full-bridge and half-bridge operation, to change the converter gain. This is simple and does not require extra sensing. However, it allows only to change the gain between 1 and 0.5 which is too excessive to achieve control at very light conditions ; furthermore, the reduced operation range results in less efficiency than a fixed topology. This is described in a publication by C. Fei et al., "Two-Stage 48 V-12 V/6 V-1.8 V Voltage Regulator Module With Dynamic Bus Voltage Control for Light-Load Efficiency Improvement", published in IEEE Transactions on Power Electronics, vol. 32, no. 7, pp. 5628-5636 (2017).

In a second approach, the PWM duty cycle is controlled under light load conditions to regulate the output voltage. This is simple and does not require extra sensing. However, the efficiency is rather poor. This approach is described by H. Pan et al. in a paper « Pulse-width modulation control strategy for high efficiency LLC resonant converter with light load applications », published in IET Power Electronics, Vol. 7(11), p. 2887-2894 (2014).

A third approach is based on pulse width modulation (PWM). Some PWM pulses are disabled to minimize switching losses. This pulse skipping approach is simple and does not require extra sensing. However, the variable control frequency may result in audible noise. This is described in the paper of H. Yoon et al., "Off-Time Control of LLC Resonant Half-Bridge Converter to Prevent Audible Noise Generation Under a Light-Load Condition", published in in IEEE Transactions on Power Electronics, vol. 33, no. 10, pp. 8808-8817 (2018).

In a fourth approach, phase shifting PWM orders between full bridge legs may be implemented. This maintains zero-voltage crossing. However, this is applicable only for full bridge topology, and may represent a non linearity with same phase changes ; this is described in Y. Lo, C. Lin, M. Hsieh and C. Lin, "Phase-Shifted Full-Bridge Series-Resonant DC-DC Converters for Wide Load Variations," in IEEE Transactions on Industrial Electronics, vol. 58, no. 6, pp. 2572-2575, June 2011, doi: 10.1109/TIE.2010.2058076.

A fifth approach implements limited PWM pattern to settle low power transfer at low load, and then uses the burst-off time where no PWM pulse is generated as the control variable ; the first pulse is optimised to suppress shrinking current during burst-on time. This reduces switching losses and increases overall efficiency. However, excessive burst-off time leads to enter audible noise frequencies. This is described by C. Fei et al. in a paper « Light Load Efficiency Improvement for High Frequency LLC Converters with Simplified Optimal Trajectory Control (SOTC) », published in 2015 IEEE Energy Conversion Congress and Exposition (ECCE), p. 1653-1659.

All these solutions have specific disadvantages. Applied to battery chargers, none of them solves both problems, that is to say a low charger efficiency at very light load, and the generation of audible noises at very light load.

The problem addressed by the present invention is to propose a new device that provides a satisfactory charger efficiency at very light load operating under conditions that do not generate audible noise.

### Objects of the invention

According to the invention the problem is solved by a specific structure of DC/DC converters comprising a full-bridge, wherein a phase shift is applied at light load conditions to a second group of switches with respect to a first group of switches. This can avoid audible noise.

A first object of the present invention is bidirectional resonant DC/DC converter comprising a full-bridge coupled to an CLLLC resonant tank and a power transformer and rectifier stage, said full-bridge comprising two pairs of power switches S1/S2 and S3/S4, configured such that in a first mode of operation :
- switches S1 and S4 are driven by the same two pulse pattern with a phase shift β₁, said two pulse pattern comprising a first pulse P1 of width t₁ and a second pulse P2 of width t₂, P1 and P2 being separated by an off-time t₃,
- switches S2 and S3 are driven by the same single pulse pattern comprising pulse P4 of width t₄ with a phase shift β₂.

According to advantageous embodiments, β₁ = β₂, and / or ½ t₁ = t₂ and/or t₂ = t₃ and/or t₄ = t₃.

Typically, for bidirectional resonant DC/DC converters used in vehicle chargers, the off-time t_{off} between two subsequent pulse patterns that drive S1 and S4 is comprised between about 0,014 msec and about 1 msec.

Advantageously, this first mode of operation is used said first mode of operation is used at low load conditions only.

A second object of the invention is a method for driving a bidirectional resonant DC/DC converter (1) comprising a full-bridge coupled to an CLLLC resonant tank and a power transformer and rectifier stage, said full-bridge comprising two pairs of power switches S1/S2 and S3/S4, wherein in a first mode of operation :
- switches S1 and S4 are driven by the same two pulse pattern with a phase shift β₁, said two pulse pattern comprising a first pulse P1 of width t₁ and a second pulse P2 of width t₂, P1 and P2 being separated by an off-time t₃, and
- switches S2 and S3 are driven by the same single pulse pattern comprising pulse P4 of width t₄ with a phase shift β₂.

### Brief description of figures

The present disclosed subject matter will be understood and appreciated more fully from the following detailed description taken in conjunction with the drawings in which corresponding or like numerals or characters indicate corresponding or like components. Unless indicated otherwise, the drawings provide exemplary embodiments or aspects of the disclosure and do not limit the scope of the disclosure.
Figure 1 is a general representation of a bidirectional resonant DC/DC converter that can be used to implement the method according to the invention.
Figures 2 to 5 illustrate PWM (Pulse Width Modulation) patterns that can be used with the bidirectional resonant DC/DC converter shown of figure 1, for each of the four switches S1,S2,S3,S4. Figures 2 to 4 illustrate PMW patterns that do not form part of the invention.

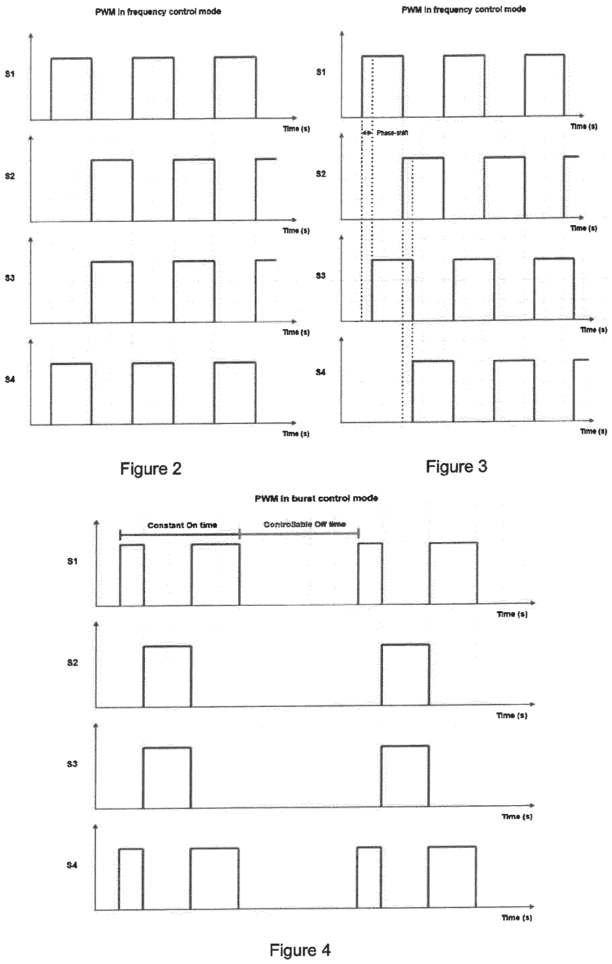

Figure 2 shows a PWM pattern in frequency-based control.
Figure 3 shows a PWM pattern in frequency-based control with phase shift.
Figure 4 shows a PWM pattern in burst-mode control.

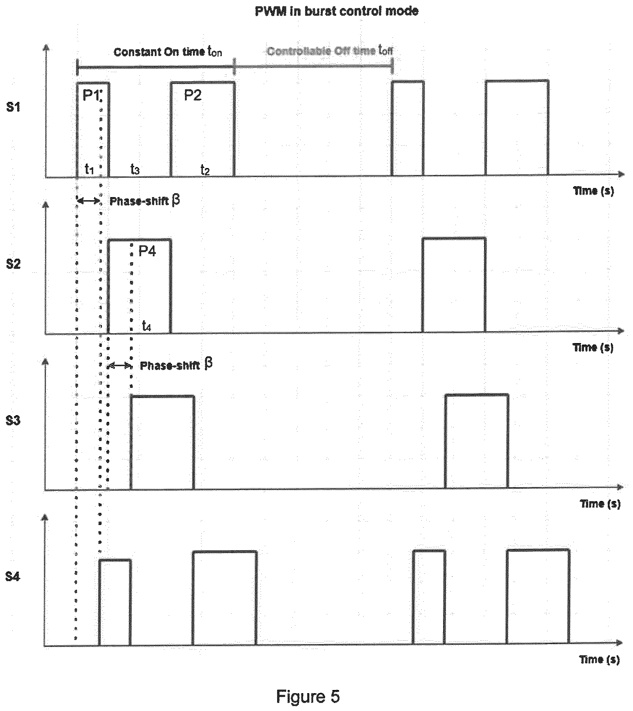

Figure 5 shows a PWM pattern for a hybrid mode, according to the invention.
Figure 6 is an example of the control technique according to the invention with 45° phase shift, according to the invention, used with a bidirectional resonant DC/DC converter according to figure 1.

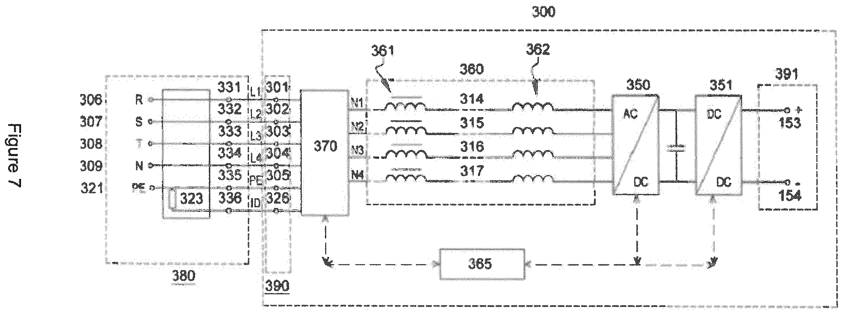

Figure 7 shows a universal and versatile charger for electric battery which acn be used to implement the present invention.

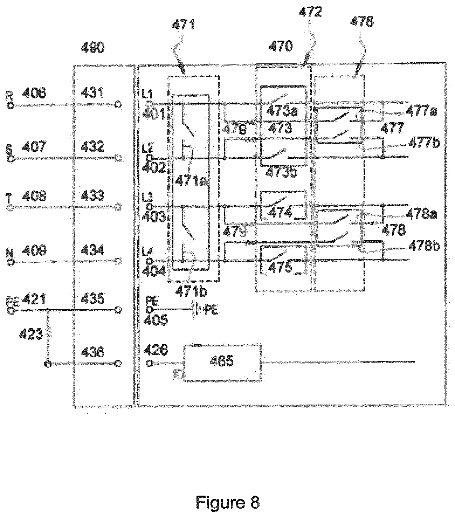

Figure 8 shows the ID detection and configuration system (also called configurator) that can be used with the charger according to figure 7.

### Detailed description

The term "switch" as used herein relates to any appropriate switching device such as a transistor, and in particular a MOSFET.

The present invention proposes a hybrid control technique for bidirectional resonant DC-DC converters, such as the circuit shown on figure 1, at light load condition. The resonant converter **1** consists of a full bridge converting stage, an LLC resonant tank and output rectifier stage. More precisely, this circuit, which is known as such, comprises a switching bridge (full bridge) **2** coupled to an LLC tank **3,** a transformer and rectifier **4,** and an output capacitor **5.** Said full-bridge comprises two pairs of power switches S1/S2 and S3/S4 on the primary side of the transformer **6.**

Figure 2 shows a pulse-width modulation (PWM) in the frequency control mode, for each of the four switches S1, S2, S3, and S4. All switches are driven by the same periodic pulse sequence, two pairs of switches (S1/S3 and S2/S4) having always the same onsets and offsets. This mode exhibits zero-voltage crossing.

Figure 3 shows a pulse-width modulation (PWM) in the frequency control mode with phase shift, for each of the four switches S1, S2, S3, and S4. All four switches are driven by the same periodic pulse sequence, but there is a constant phase shift between the pulse sequence of S1 with respect to S3, and of S2 with respect to S4.

Figure 4 shows a pulse-width modulation (PWM) in the burst mode, for each of the four switches S1, S2, S3, and S4. For switches S1 and S4 a two pulse pattern is used. The off-time is adjusted by the controller of the DC/DC converter such as to match the target current. This PWM pattern turns out to have disadvantages similar to those described above in relation with the publication by Fei et al that has been cited above, namely the generation of audible noise.

Figure 5 relates to an advantageous embodiment of the present invention and shows a pulse-width modulation (PWM) in the burst mode with phase-shift, for each of the four switches S1, S2, S3, and S4. Switches S1 and S4 are driven by the same two pulse pattern with a phase shift. Switches S2 and S3 are driven by the same single pulse pattern, with the same phase shift β as S1 and S4. For S1 and S4, the width t₁ of pulse P1 is one half of the width t₂ of pulse P2, and the off-time t₃ is equal to t₂. For S2 and S3, the width t₄ of pulse P4 is equal to t₃.

In an advantageous method to use this modulation technique, the on-time tₒₙ is constant and the off-time t_{off} can be adjusted between a minimum value and a maximum value. Said minimum value of t_{off} can be estimated as 2/fₘₐₓ wherein fₘₐₓ is the maximum frequency of the components (for instance 140 kHz in an advantageous embodiment of the invention). The maximum value of t_{off} can be estimated as of the order of about 1 kHz in the same advantageous embodiment. The phase shift can be adjusted, too. The value of t₂ is advantageously of the order of fₘₐₓ/2.

This control technique according to the present invention combines burst mode with full bridge phase-shifting to step down high DC bus voltage or output voltage (V_{batt}), depending on the power flow direction (V_{batt} in battery charging mode, DC bus voltage in battery discharging mode). The benefit of the proposed control is achieving DC bus control at very light load without operating in the audible frequencies range. This is obtained by a method in which the burst mode control frequency is decreased until the audible noise limit (knowing that the acoustic frequency generated by the circuit decreases with increasing t_{off}) and then the phase-shifting of the burst pulses is started. For an improved efficiency, the burst pulse pattern is based on OTC (Optimal Trajectory Control) version to avoid resonant current inrush and to obtain soft switching. For sake of control simplification, the phase-shift range is limited to its linear portion.

The method according to the invention can be used in battery chargers. In such a charger, the input DC voltage **7** is typically of the order of 650 V to 850 V and the output voltage **8** is typically of the order of 250 to 450 V.

Figure 7 shows a universal and versatile battery charger **300** for use with an electrical vehicle, in which this bidirectional resonant DC-DC converter **1** can be used. The charger operates here in a four-phase configuration. The charger **300** is provided with a DC/DC converter **351** in addition to the AC/DC converter **350.** The CC/DC converter **351** is connected to the battery (not shown in the figures) via connector **153** and connector **154,** and to the grid via connector unit **390.** We will first describe the various connectors of this charger, and then the way how to adapt the configuration of the charger to the configuration of the grid to which it may be connected.

The first connector unit **390** comprises six connectors, five of which are intended to be connected to grid connectors when the device **300** ist used as a charger in four-phase operation mode. The peculiar feature of this embodiment (which is compatible with all embodiments of the present invention) is the presence of a signal line ID, which will be explained below. An adapter unit **380** is used for connecting the first connector unit **390** to the grid ; the third connector unit with grid connectors is not shown on this figure.

Each connector **301,302,303,304,305,326** of the first connector unit **390** has a corresponding connector **331,332,333,334,335,336** on the charger-side of the adapter **380 :** the L1 connector **301** matches connector **331,** L2 connector **302** matches connector **332,** L3 connector **303** matches connector **333,** L4 connector **304** matches connector **334,** PE connector **305** matches connector **336,** and ID connector **326** matches connector **336.** The grid side of adapter **380** has corresponding connectors : L1 connector **331** is connected to grid line R **306,** L2 connector **332** is connected to grid line S **307,** L3 connector **333** is connected to grid line T **308,** L4 connector **334** is connected to grid line N **309,** PE connector **321** is connected to the protective earth PE **321.**

The universal and versatile charger **300** for electric battery shown in figure 7 can be configured differently by means of configurator **370** using a set of switches ; as an example, the four-phase mode can be switched to the three-phase mode, and vice versa. It should be noted that in this figure, dotted current lines indicate the optional presence of additional components.

The configuration of the charger **300** is set by switches comprised in the configurator **370.** Said configurator **370** is controlled by a digital signal processor (DSP) **365** which includes a microprocessor. Said DSP **365** also receives data from the the configurator **370** and from the AC/DC converter **350** and/or the DC/DC converter **351.** This bidirectional communication link for digital data transfer is symbolized on figure 7 by dotted lines with arrows.

The DSP **365** senses the voltage signal ID derived from the protective earth PE via resistance **323,** and is configured to recognize the configuration of the grid when the charger is connected to the grid. It will then configure the configurator **370** accordingly, by sending appropriate instructions to the switches of the configurator **390.** Furthermore, the DSP **365** is configured such that when the user selects the V2L mode, the DSP **365** will instruct the configurator **370** to configure the circuits accordingly, using switches ; this will be described below in relation with figures 4 and 5. External resistance **323** can be incorporated in the AC cable or in the adapter, or added externally by the user.

The ID detection and reconfiguration unit **370** automatically recognizes the grid configuration (such as : four-phase, three-phase with/without neutral, bi-phase, single-phase). It also allows to set the charger to a V2L configuration. This will be explained in greater details in relation with figure 8.

Figure 8 is a detailed view of the embodiment of figure 7, with the reference numbers for common features being increased by 100 with respect to figure 8, and emphasis being given to the structure and setting of the configurator **370,470.** The configurator **470** comprises a first switching unit **471,** a second switching unit **472,** and a third switching unit **476.** The switches of each of these switching units can advantageously be formed by two independent relays (preferably so-callled 1Form A relays with a default state of normally open) operated simultaneously, or by one single relay of the 2 Form A type (this terminology being known to a person skilled in the art of electrical engineering).

Said first switching unit **471** may comprise two switches **471a,471b** which are closed in case of charging in single-phase mode; this allows to charge up to two third of the nominal three-phase mode power, thereby allowing the reduction of the charging time by half compared to the state of the art. In other operating modes switches **471a,471b** are open. If the charger is not designed for operation in the single-hase mode, the first switiching unit **471** may be absent.

Said third switching unit **476** is optional. It comprises two switching subunits **477,478,** each of which comprises two switches **477a,477b;478a,478b.** These switching subunits **477,478** are pre-charge relays used for passive precharge of the DC bus capacitors. Once the precharge is done, these relays can be opened.

Said second switching unit **472** comprises three switching subunits **473,474,475.** The first **473** and second **474** switching subunits are main AC relays. They are closed in case of charging in the single-phase or three-phase mode once the pre-charge is over. The first switching unit **473** comprises two switches **473a;473b.** The third switching subunit **475** is only closed in single-phase mode charging or in the case of three-phase mode charging with neutral. However, it is preferred that in case of unbalanced three-phase systems with neutral, when the charger is connected to the AC grid, switch **475** be openend to force the homopolar (or zero sequence) current to zero.

Resistors **479** between the first **471** and second **472** switching unit are so-called « precharge resistors », known as such. Their function is to precharge the capacitive elements, in order to avoid a peak of inrush current; such a peak inrush current could be capable of damaging switches, input capacitors, fuses and battery cells.

The connectors L1 **401,** L2 **402,** L3 **403, L4 404,** PE **405** as well as the connector for the ID cable **426** are configured to be connectable to a six pins AC connector **490.** Said AC connector **490** allows to connect:
- the L1 connector **401** via current line **431** to the R connector **406** of the grid,
- the L2 connector **402** via current line **432** to the S connector **407** of the grid,
- the L3 connector **403** via current line **433** to the T connector **408** of the grid,
- the L4 connector **404** via current line **434** to the N connector **409** of the grid,
- the PE connector **405** via current line **435** to the protective earth **421** of the grid.

The ID connector **426** is connected via current line **436** in series to an external resistance **423** that connects in parallel with the protective earth **421** of the grid. The manufacturer of the charger specifies to the user the value of the external resistance **423** to be added for each operation mode. Alternatively, a kit of *n* adapters **480** can be supplied with the charger **470** to be incorporated between the converter input and the five pins AC connector, wherein *n* is the number of possible configurations of the grid.

These adapters incorporate the resistance **423,** and therefore each of these adapters is characterised by a specific value of adapter resistance **423.**

According to an advantageous feature of the invention, the DC/DC converter **350** is configured to operate under light load conditions such that a phase shift is applied at light load conditions to a second group of switches with respect to a first group of switches, as explained above.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

### Example

A bidirectional battery charger for electrical vehicles according to the invention has been produced. This charger allows convention and reversible power conversion betwen the grid (AC) and a battery (DC). It is configured for smart grid (vehicle-to-grid, vehicle-to-home and vehicle-to-load) applications and features modular design for parallel operation. Typical applications of this charger include electric vehicle supply equipment systems, energy storage systems and industrial supplies. The charger comprises a bidirectional non isolated AC/DC converter and a bidirectional isoated DC/DC converter.

The DC/DC converter according to figure 1 is a CLLLC resonant topology with a variable DC link voltage according to the variations in battery voltage. The CLLLC converter is operated at resonance or close to the resonance frequency which was chosen to be equal to 80 kHz ± 10 % to optimize the efficiency of the converter. The converter can operate below or above resonance frequency if required (typically in a range between 50 kHz to 140 kHz), including during start-up when the converter starts at about 140 kHz and slowly comes to the required frequency to avoid inrush current in output capacitors. Operation starts with hybrid or burst mode with low current (light load conditions) and switches to a frequency-based control when the burst off-time reaches its minimum value (due to current rise); the transition to a frequency-based control mode marks the end of the light load conditions.

At high load S1 and S4 are driven by the same periodic signal, and S2 and S3 are driven by the same periodic signal, too. At light load a hybrid control mode that combines burst control and phase shift according to figure 5 has been used. Figure 6 shows an oscilloscope output generated by LT-spice simulation of such a DC/DC converter at light load.

## Claims

1. A bidirectional resonant DC/DC converter comprising a full-bridge (2) coupled to an CLLLC resonant tank (3) and a power transformer and rectifier stage (4), said full-bridge (2) comprising two pairs of power switches S1/S2 and S3/S4, configured such that in a first mode of operation :
- switches S1 and S4 are driven by the same two pulse pattern with a phase shift β₁, said two pulse pattern comprising a first pulse P1 of width t₁ and a second pulse P2 of width t₂, P1 and P2 being separated by an off-time t₃,
- switches S2 and S3 are driven by the same single pulse pattern comprising pulse P4 of width t₄ with a phase shift β₂.

2. A bidirectional resonant DC/DC converter according to claim 1, wherein β₁ = β₂.

3. A bidirectional resonant DC/DC converter according to claim 1 or 2, wherein ½ t₁ = t₂.

4. A bidirectional resonant DC/DC converter according to any of claims 1 to 3, wherein t₂ = t₃.

5. A bidirectional resonant DC/DC converter according to any of claims 1 to 4, wherein t₄ = t₃.

6. A bidirectional resonant DC/DC converter according to any of claims 1 to 3, wherein the off-time t_{off} between two subsequent pulse patterns that drive S1 and S4 is comprised between about 0,014 msec and about 1 msec.

7. A bi-directional resonant DC/DC converter according to any of claims 1 to 6, configured such that in a second mode of operation, said converter is frequency-controlled.

8. A bi-directional resonant DC/DC converter according to claim 7, configured such that said first mode of operation is used at low load conditions only.

9. A battery charger for charging the battery of an electric vehicle, said battery charger comprising a bidirectional resonant DC/DC converter according to any of claims 1 to 8, and said battery charger further comprising an AC/DC converter (350) configured to operate under light load conditions such that a phase shift is applied to a second group of switches with respect to a first group of switches.

10. A battery charger according to claim 9, further comprising a configurator (370,470) provided with a set of switches and/or relays capable of switching between a three-phase operation and a four-phase operation for charging said battery from the grid, and said configurator (370,470) preferably further comprising a detection system configured to detect the grid configuraton, and in particular to identify a three-phase grid configuration and a four-phase grid configuration, and even more preferably further comprising a system to configure said set of switches according to the grid configuration detected by said detection system.

11. Method for driving a bidirectional resonant DC/DC converter according to any of claims 1 to 8, or a battery charger according to any of clams 9 to 10, said resonant DC/DC converter comprising comprising a full-bridge (2) coupled to an CLLLC resonant tank (3) and a power transformer and rectifier stage (4), said full-bridge comprising two pairs of power switches S1/S2 and S3/S4, wherein in a first mode of operation :
- switches S1 and S4 are driven by the same two pulse pattern with a phase shift β₁, said two pulse pattern comprising a first pulse P1 of width t₁ and a second pulse P2 of width t₂, P1 and P2 being separated by an off-time t₃,
- switches S2 and S3 are driven by the same single pulse pattern comprising pulse P4 of width t₄ with a phase shift β₂.

12. Method according to claim 11 wherein β₁ = β₂.

13. Method according to claim 11 or 12, wherein ½ t₁ = t₂.

14. Method according to any of claims 11 to 13, wherein t₂ = t₃.

15. Method according to any of claims 11 to 14, wherein t₄ = t₃.
